# FASCICULE DE BREVET EUROPEEN

(11) **EP 0 596 774 B1**
(45) Date de publication et mention de la délivrance du brevet: **14.05.1997**
(21) Numéro de dépôt: 93402628.7
(22) Date de dépôt: 26.10.1993
(51) Int. Cl.: C03C 1/00

(54) **Procédé de vitrification de résidus solides issus d'incinération de déchets ménagers et/ou industriels, et produit issu de ce procédé**
Verfahren zum Verglasen von festen Abfällen der Verbrennung von Haus- und/oder Industriemüll und so erhaltene Produkte
Process for vitrifying solid residues obtained by burning household and/or industrial refuse, and product obtained by this process

(30) Priorité: 04.11.1992 FR 9213245
(43) Date de publication de la demande: 11.05.1994
(73) Titulaire: CONSTRUCTIONS INDUSTRIELLES DE LA MEDITERRANEE- CNIM, F-75008 Paris (FR)
(72) Inventeur: Tabaries, Frank, F-83000 Toulon (FR); Normant, Alain, F-83200 Toulon (FR); Durand, Jean-Pierre, F-83500 La Seyne (FR)
(74) Mandataire: Durand, Yves Armand Louis

(56) Documents cités:
- EP-A- 0 019 338
- EP-A- 0 431 286
- EP-A- 0 493 217
- FR-A- 2 045 437

## Description

La présente invention concerne un procédé de vitrification de résidus solides issus d'incinération de déchets ménagers ou industriels et plus particulièrement des résidus issus de l'épuration des fumées d'incinération de déchets ménagers ou industriels. L'invention concerne également le produit issu du procédé.

On connaît déjà un procédé de vitrification de résidus solides issus d'incinération de déchets ménagers ou industriels consistant à porter les résidus à une température élevée afin de réaliser leur fusion, puis, à refroidir rapidement ces résidus pour obtenir un verre. Mais ce procédé, utilisant une température élevée, provoque une libération des polluants tels que des chlorures, des oxydes de soufre, des métaux lourds par des réactions de vaporisation et de décomposition.

Les réactions de décomposition et de vaporisation des polluants ont déjà été évitées par l'utilisation d'additifs à très bas point de fusion. Mais la différence de température entre la température de fusion des résidus et la température de fusion de l'additif entraîne que pour une faible variation de composition donnée du mélange résidus/additif, due en particulier à une variation de la composition des résidus, la variation de température de fusion de ce mélange sera importante.

Or, la variation importante de la composition et de la nature des résidus à traiter oblige à travailler à une température très supérieure à la température de fusion du mélange résidus/additif, et empêche par conséquent le piégeage des polluants nocifs pour l'environnement.

De plus, l'ajout de ces additifs à bas point de fusion augmente l'agressivité du bain de fusion et, rend nécessaire l'utilisation de revêtements haut de gamme pour les parois du four de fusion.

La présente invention a pour but de pallier les inconvénients précédents en permettant de ralentir la séparation des liquides non miscibles constituant le mélange en fusion et d'obtenir une émulsion de ce mélange permettant de piéger les substances polluantes pour l'environnement.

Le document EP-A-0 019 338 décrit un procédé de préparation de laitiers artificiels comprenant la préparation d'une charge qui est fusible à une température comprise entre 1400 et 1550°C et qui est capable de vitrifier après une fusion, afin d'obtenir un laitier artificiel fondu comprenant au moins 45 à 52% de CaO, 15 à 22% de Al₂O₃ et 27 à 34% de SiO₂ dans le produit sec. Ce procédé ne concerne pas un procédé de vitrification de résidus solides provenant de l'épuration des fumées résultant de l'incinération de déchets ménagers et/ou industriels et de plus, la température de fusion de la charge est encore très élevée, nommément entre 1400 et 1550°C. Par conséquent, une telle charge ne pourrait être utilisée dans le procédé de l'invention.

Ces buts sont atteints par l'invention qui propose un procédé de vitrification de résidus solides issus d'incinération de déchets ménagers et/ou industriels et du type consistant à mélanger les résidus avec un additif, à chauffer ce mélange M jusqu'à la fusion afin d'obtenir au moins deux liquides non miscibles puis à refroidir rapidement ce mélange M pour former un verre, caractérisé en ce que environ 45% en poids de la masse sèche du mélange M comprend un mélange M₂ d'oxydes de silicium, d'aluminium et de calcium, en ce que la masse sèche de l'additif est constituée d'au moins 60% en poids d'un mélange M₁ d'oxydes de silicium, d'aluminium et de calcium et en ce que la différence entre la température à laquelle est portée le mélange M et la température de fusion dudit mélange M est inférieure à 50°C.

La composition du mélange M₂ précité est comprise dans la zone, du diagramme de phases ternaire SiO₂-Al₂O₃-CaO, délimitée par l'isotherme 1400°C des nappes liquidus de ce diagramme.

Selon une caractéristique de la présente invention, le procédé est caractérisé en ce que le mélange M₁ précité comprend entre environ 55% et environ 75% en poids de SiO₂, entre environ 5% et environ 30% en poids de Al₂O₃ et entre environ 5% et environ 35% en poids de CaO. L'additif est choisi parmi le mâchefer, la pouzzolane, le basalte.

Le chauffage du mélange M est réalisé au sein du bain.

Le mélange M est introduit au sein de ce mélange en fusion, la composition du mélange M étant sensiblement identique à celle du bain en fusion.

La présente invention a également pour objet le produit vitrifié solide obtenu selon le procédé, et caractérisé en ce qu'il est constitué d'une masse vitreuse, composée d'oxydes, dans laquelle sont piégés, sous forme d'inclusions finement dispersées, des sels tels que des chlorures de sodium, de potassium, de calcium et des sulfates de calcium ou analogues, et des métaux lourds néfastes pour l'environnement.

La masse vitreuse peut piéger une masse de sels précités pouvant aller jusqu'à une masse égale à sa propre masse.

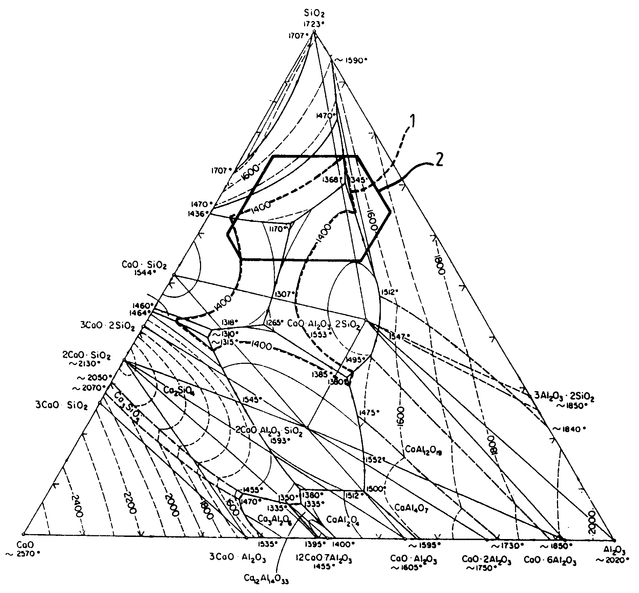

L'invention sera mieux comprise et d'autres buts, caractéristiques, détails et avantages de celle-ci apparaîtront plus clairement au cours de la description explicative qui va suivre faite en référence au dessin unique annexé qui représente le diagramme des phases ternaire CaO-SiO₂-Al₂O₃ où les proportions en chacun des constituants sont données en pourcentage massique.

Le procédé de vitrification de la présente invention consiste d'abord à chauffer le mélange, constitué par les résidus solides à traiter et un additif, jusqu'à la fusion, puis à refroidir rapidement ce mélange afin d'obtenir un verre.

Le chauffage du mélange permet d'obtenir au moins deux liquides non miscibles. Ce chauffage est réalisé à une température peu supérieure à la température de fusion du mélange.

Un chauffage du mélange à une telle température permet de freiner le phénomène physique de séparation des liquides constituant le mélange.

En effet, les liquides formant le mélange sont constitués d'une part de sels fondus, tels que des chlorures de sodium, de potassium, de calcium, des sulfates tels que des sulfates de calcium, d'autre part d'oxydes tels que des oxydes de silicium, d'aluminium, de calcium, de sodium ou de potassium, ou de métaux lourds. Ainsi, l'immiscibilité des liquides entraîne une démixion à l'équilibre. Il y a séparation des liquides, et le liquide de densité plus faible, à savoir le liquide contenant des sels fondus, surnage.

La condition de chauffage selon le procédé de l'invention, permet de ralentir et/ou d'éviter la libération des substances nocives pour l'environnement. En effet, le chauffage étant effectué à des températures élevées, telles qu'environ 1300°C, les sels se décomposent et/ou se vaporisent d'autant plus rapidement que la température de chauffage est élevée.

A une température de chauffage donnée et pour une composition chimique donnée du mélange résidus/additif, les masses volumiques respectives des différents liquides sont figées.

Le chauffage du mélange résidus/additif à une température peu supérieure à la température de fusion de ce mélange, permet de maintenir à l'état visqueux le liquide, constitué des oxydes, qui va devenir la matrice vitreuse après l'étape de refroidissement rapide.

La différence de température entre la température à laquelle est porté le mélange et la température de fusion du mélange doit être inférieure à environ 50°C.

Sur la figure on voit une première zone 1 qui est délimitée par l'isotherme 1400°C des nappes de liquidus du diagramme ternaire CaO-SiO₂-Al₂O₃. Avant fusion, la masse sèche du mélange résidus/additif M est constituée d'environ 45% en poids d'un mélange M₂ d'oxydes de silicium, d'aluminium et de calcium. Ce mélange M₂ dont la composition chimique est normée à 100 a son point représentatif à l'intérieur de la zone 1.

La variation de la composition des résidus à traiter entraîne une variation de la composition du mélange M₂ des oxydes, donc une variation de la température de fusion du mélange M.

Ainsi pour une même variation de composition des résidus à traiter, la différence de température entre la température à laquelle est porté le mélange résidus/additif et la température de fusion de tous les constituants de ce mélange sera beaucoup plus faible qu'avec l'utilisation d'un additif à bas point de fusion. En effet on se trouve dans une zone à faible pente de liquidus.

La masse sèche de l'additif selon l'invention est constituée d'environ 60% en poids d'un mélange M₁ d'oxydes de silicium, d'aluminium et de calcium, et d'environ 40% en poids d'oxydes tels que des oxydes de sodium, de potassium et de fer.

Sur la figure on voit également une seconde zone 2, de forme hexagonale, délimitant la composition du mélange M₁ en oxydes de silicium, d'aluminium et de calcium.

Les 60% en poids d'oxydes de silicium, d'aluminium et de calcium du mélange M₁ sont normés à 100. L'oxyde de silicium est compris entre environ 55% et environ 75% en poids, l'oxyde d'aluminium est compris entre environ 5% et environ 30% en poids et l'oxyde de calcium est compris entre environ 5% et 35% en poids.

Les carbonates et les hydroxydes de calcium sont exprimés en équivalent oxyde de CaO et les sels de calcium tels que des chlorures et le sulfate sont comptabilisés séparément des oxydes de calcium. En effet, l'hydroxyde de calcium Ca(OH)₂ et le carbonate de calcium CaCO₃ se décomposent respectivement à des températures d'environ 580°C et environ 850°C sous air à la pression atmosphérique pour former de l'oxyde de calcium CaO.

Pour mieux faire comprendre l'objet de l'invention, on va en décrire maintenant à titre d'exemples purement illustratifs et non limitatifs plusieurs modes de mise en oeuvre.

### Exemple 1

On réalise trois mélanges M résidus/additif référencé respectivement I, II, III dans le tableau 1 avec des proportions en résidus et en additif différentes. L'additif choisi est du mâchefer issu d'incinération de déchets. Les résidus à traiter sont des cendres issues d'un dispositif de traitement de fumées par voie semi-humide situé en aval du four d'incinération.

Dans cet exemple, les trois mélanges résidus/additif remplissent les conditions relatives à la composition de l'additif et à la température de chauffage du mélange.

Seul le premier mélange I n'est pas conforme aux conditions relatives au mélange résidus/additif indiquées précédemment.

En effet, la masse sèche de ce mélange comprend 44% en poids d'un mélange M₂ d'oxydes de silicium, d'aluminium et de calcium dont le point représentatif est en dehors de la zone 1.

Le premier mélange I est traité à une température d'environ 1350°C, les second et troisième mélanges II et III, à une température d'environ 1250°C.

Le tableau 1 donne la composition chimique des matières premières et des mélanges de ces matières après vitrification ainsi que la répartition des différents composés. Les différentes valeurs sont données en % en poids.

Le premier mélange I comprend une faible proportion en poids entre les cendres et l'additif, et se trouve dans une zone à forte pente de liquidus.

Les sels sont bien piégés dans la masse vitreuse, mais une faible variation d'environ 2% en poids de la quantité d'oxyde de silicium, par exemple, entraîne une forte variation de la température de fusion de tous les constituants du mélange. On obtient alors, en conservant constante la température du mélange (1350°C), soit une prise en masse consécutive à la cristallisation d'un des constitutants du mélange, soit l'apparition de réactions de décomposition ou de vaporisation des sels.

Les deux autres mélanges II et III remplissent les conditions selon l'invention et sont chauffés à une température d'environ 1250°C, soit 100°C inférieure à la température de chauffage du premier mélange. Ceci favorise la limitation des réactions de décomposition et de vaporisation. Les données des deux derniers mélanges II et III montrent qu'une variation d'environ 8% en poids d'oxyde de silicium par exemple et en maintenant une température de chauffage constante d'environ 1250°C, les substances nocives sont piégées dans la masse vitreuse en évitant le phénomène de prise en masse ou de décomposition tel que décrit ci-dessus.

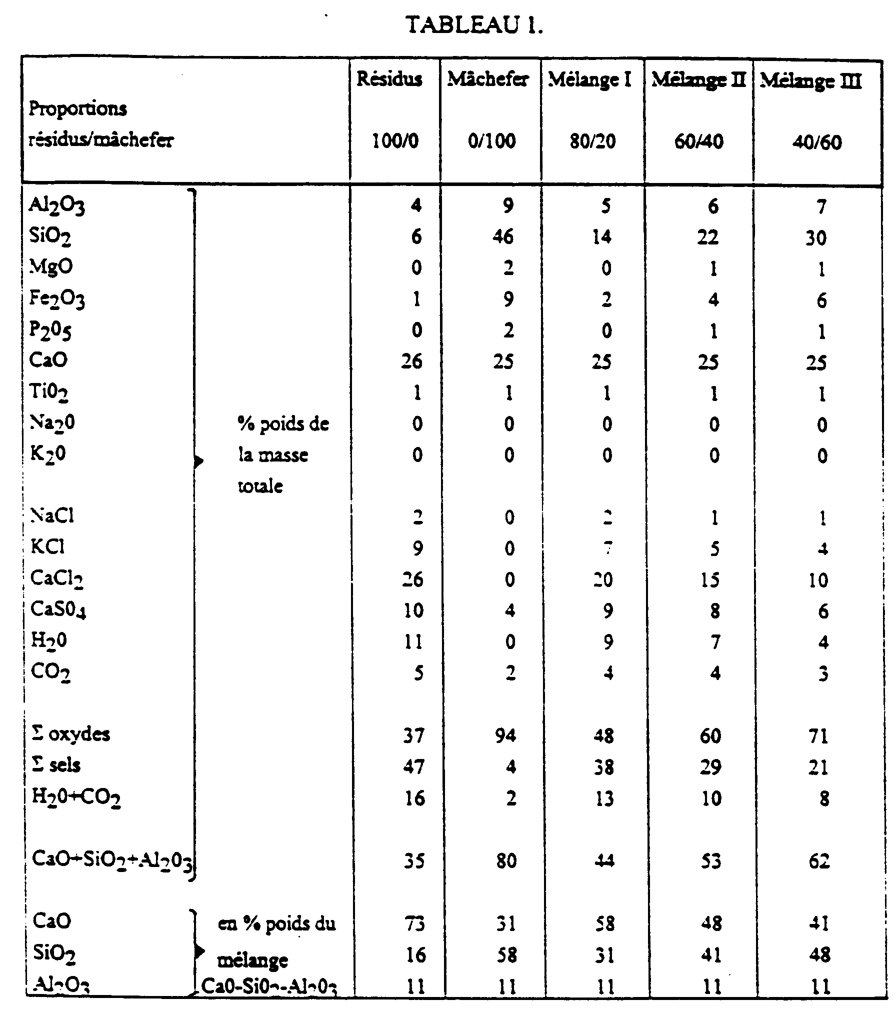

### Exemple 2

Les trois mélanges I, II, III remplissent les mêmes conditions que dans l'exemple 1, l'additif choisi étant de la pouzzolane.

Le tableau 2 donne la composition chimique des matières premières et des mélanges de ces matières après vitrification ainsi que la répartition des différents composés. Les différentes valeurs sont données en % en poids.

Les conclusions pour cet exemple sont les mêmes que pour l'exemple 1.

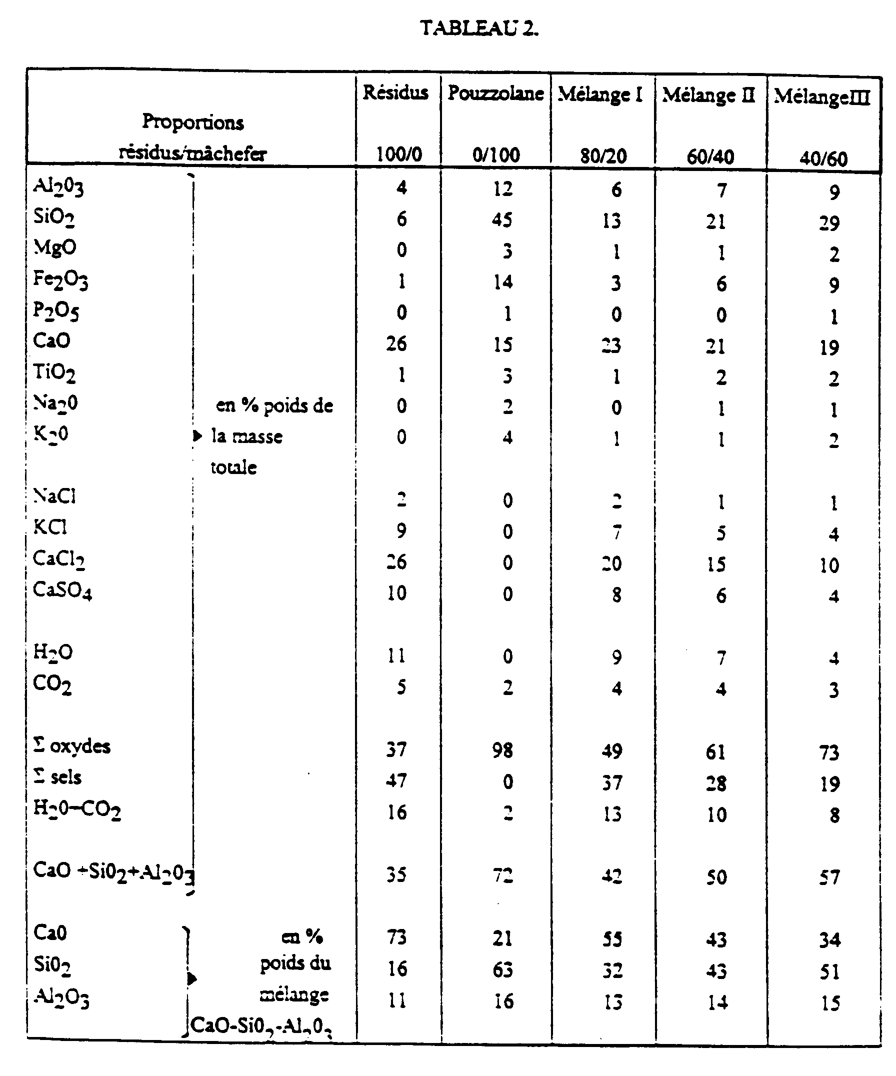

### Exemple 3

Dans cet exemple, deux mélanges de compositions identiques sont traités à des températures différentes. Les résultats obtenus sont différents :

Le second cas ne remplit pas la condition concernant la différence de température entre la température à laquelle est porté le mélange et la température de fusion. En effet, la différence de température est supérieure d'environ 100°C à la température de fusion du mélange.

Le premier cas remplit toutes les conditions précédemment exposées.

L'additif choisi dans les deux cas est de la pouzzolane. La composition initiale des deux mélanges est identique.

Le tableau 3 donne la composition chimique des matières premières et de leur mélange après vitrification ainsi que la répartition des différents composés dans ces deux mélanges. Les différentes valeurs sont données en % en poids.

A partir des données du tableau 3, on remarquera que le premier mélange qui remplit toutes les conditions selon l'invention, piège mieux les sels polluants pour l'environnement au sein de la matrice vitreuse formée par les oxydes. En effet, dans le second mélange, la majeure partie des sels nocifs était libérée avec la phase gazeuse.

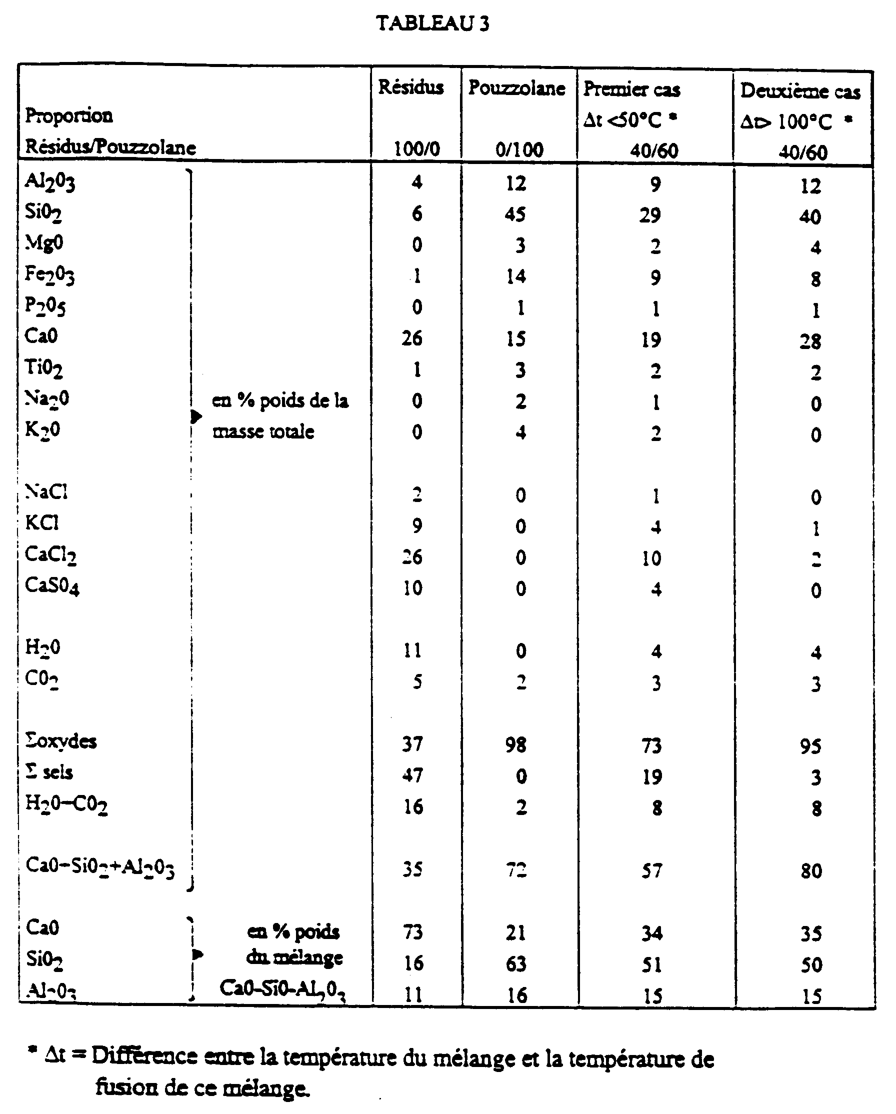

## Revendications

1. Procédé de vitrification de résidus solides issus de l'incinération de déchets ménagers et/ou industriels et du type consistant à mélanger les résidus avec un additif, à chauffer ce mélange M jusqu'à la fusion afin d'obtenir au moins deux liquides non miscibles puis à refroidir rapidement ce mélange M pour former un verte, caractérisé en ce que environ 45% en poids de la masse sèche du mélange M comprend un mélange M₂ d'oxydes de silicium, d'aluminium et de calcium, en ce que la masse sèche de l'additif est constituée d'au moins 60% en poids d'un mélange M₁ d'oxydes de silicium, d'aluminium et de calcium et en ce que la différence entre la température à laquelle est portée le mélange M et la température de fusion dudit mélange M est inférieure à 50°C.

2. Procédé selon la revendication 1, caractérisé en ce que la composition du mélange M₂ précitée est comprise dans la zone (1) du diagramme des phases ternaires SiO₂-Al₂O₃-CaO, délimitée par l'isotherme 1400°C des nappes de liquidus de ce diagramme.

3. Procédé selon la revendication 1 ou 2, caractérisé en ce que le mélange M₁ précité comprend entre environ 55% et environ 75% en poids de SiO₂, entre environ 5% et environ 30% en poids de Al₂O₃ et entre environ 5% et environ 35% en poids de CaO.

4. Procédé selon l'une quelconque des revendications précédentes, caractérisé en ce que l'additif est choisi parmi le mâchefer, la pouzzolane, le basalte.

5. Procédé selon l'une quelconque des revendications précédentes, caractérisé en ce que le chauffage du mélange M est réalisé au sein du bain.

6. Procédé selon l'une quelconque des revendications précédentes, caractérisé en ce que le mélange M est introduit au sein de ce mélange en fusion, la composition du mélange M étant sensiblement identique à celle du bain en fusion.

7. Produit vitrifié obtenu par le procédé selon l'une quelconque des revendications précédentes, caractérisé en ce qu'il est constitué par une masse vitreuse constituée d'oxydes dans laquelle sont piégés, sous forme d'inclusions finement dispersées, des sels, des chlorures de sodium, de potassium, de calcium et des sulfates de calcium ou analogues et des métaux lourds néfastes pour l'environnement.

8. Produit selon la revendication 7, caractérisé en ce que la masse vitreuse peut piéger une masse des sels précités pouvant aller jusqu'à une masse égale à sa propre masse.

## Claims

1. Method of vitrification of solid residues originating from the incineration of household and/or industrial refuse and of the type consisting in mixing the residues with an additive, in heating this mixture M until melting in order to obtain at least two non miscible liquids and then in quickly cooling this mixture M to form a glass, characterized in that about 45% by weight of the dry mass of the mixture M comprises a mixture M₂ of silicon oxides, aluminium oxides and calcium oxides, and that the dry mass of the additive consists of at least 60% by weight of a mixture M₁ of silicon oxides, aluminium oxides and calcium oxides and in that the difference between the temperature up to which the mixture M is brought and the melting temperature of the said mixture M is lower than 50°C.

2. Method according to claim 1, characterized in that the composition of the aforesaid mixture M₂ is lying within the zone (1) of the diagram of the ternary phases SiO₂-Al₂O₃-CaO, limited by the 1400°C-isotherm of the liquidus sheets of this diagram.

3. Method according to claim 1 or 2, characterized in that the aforesaid mixture M₁ comprises between about 55% and about 75% by weight of SiO₂, between about 5% and about 30% by weight of Al₂O₃ and between about 5% and about 35% by weight of CaO.

4. Method according to any one of the foregoing claims, characterized in that the additive is selected among the slag, the pouzzolana, the basalt.

5. Method according to any one of the foregoing claims, characterized in that the heating of the mixture M is carried out within the bath.

6. Method according to any one of the foregoing claims, characterized in that the mixture M is inserted into this molten mixture, the composition of the mixture M being substantially identical with that of the molten bath;

7. Vitrified product obtained by the method according to any one of the foregoing claims, characterized in that it is constituted by a vitreous mass consisting of oxides in which are trapped as finely dispersed inclusions, salts, sodium chlorides, potassium chlorides, calcium chlorides and calcium sulphates or the like and heavy metals harmful to the environment.

8. Product according to claim 7, characterized in that the vitreous mass may trap a mass of the aforesaid salts which may go up to a mass equal to its own mass.

## Patentansprüche

1. Verfahren zur Verglasung von aus der Verbrennung von Hausmüll und- oder Industrieabfällen stammenden festen Rückständen und derjenigen Gattung, die darin besteht, die Rückstände mit einem Zusatzstoff zu vermischen, dieses Gemisch M bis zur Schmelzung zu erwärmen, um wenigstens zwei nicht mischbare Flüssigkeiten zu erhalten und dann dieses Gemisch M schnell abzukühlen, um ein Glas zu bilden, dadurch gekennzeichnet, daß ungefähr 45 Gewichtsprozent der Trockenmasse des Gemisches M ein Gemisch M₂ von Siliziumoxyden, Aluminiumoxyden und Kalziumoxyden umfasst, daß die Trockenmasse des Zusatzstoffes aus wenigstens 60 Gewichtsprozent eines Gemisches M₁ von Siliziumoxyden, Aluminiumoxyden und Kalziumoxyden besteht und daß der Unterschied zwischen der Temperatur auf welche das Gemisch M gebracht wird und der Schmelztemperatur des besagten Gemisches M niedriger als 50°C ist.

2. Verfahren nach Anspruch 1, dadurch gekennzeichnet, daß die Zusammensetzung des vorgenannten Gemisches M₂ in dem Bereich (1) des Diagramms der ternären Phasen SiO₂-Al₂O₃-CaO liegt, der durch die Isotherme 1400°C der Liquidusflächen dieses Diagramms abgegrenzt wird.

3. Verfahren nach Anspruch 1 oder 2, dadurch gekennzeichnet, daß das vorgenannte Gemisch M₁ zwischen ungefähr 55 und ungefähr 75 Gewichtsprozent SiO₂, zwischen ungefähr 5 und ungefähr 30 Gewichtsprozent Al₂O₃ und zwischen ungefähr 5 und ungefähr 35 Gewichtsprozent CaO umfaßt.

4. Verfahren nach irgendeinem der vorangehenden Ansprüche, dadurch gekennzeichnet, daß der Zusatzstoff unter Schlacke, Puzzolanerde, Basalt gewählt wird.

5. Verfahren nach irgendeinem der vorangehenden Ansprüche, dadurch gekennzeichnet, daß die Erwärmung des Gemisches M innerhalb des Bades durchgeführt wird.

6. Verfahren nach irgendeinem der vorangehenden Ansprüche, dadurch gekennzeichnet, daß das Gemisch M in dieses geschmolzene Gemisch eingeführt wird, wobei die Zsammensetzung des Gemisches M etwa mit derjenigen des Schmelzbades identisch ist.

7. Mit dem Verfahren gemäß irgendeinem der vorangehenden Ansprüche erhaltenes verglastes Erzeugnis, dadurch gekennzeichnet, daß es durch eine aus Oxyden bestehende glasartige Masse gebildet wird, in welchen Natriumchloride, Kaliumchloride, Kalziumchloride und Kalziumsulfate oder dergleichen und für die Umwelt schädliche schwere Metalle als fein zerstreute Einschlüße eingefangen sind.

8. Erzeugnis nach Anspruch 7, dadurch gekennzeichnet, daß die glasartige Masse eine Masse der vorgenannten Salze, die bis zu einer ihrer eignen Masse gleichen Masse gehen kann, einfangen kann.
